# EUROPEAN PATENT SPECIFICATION

(11) **EP 3 144 844 B1**
(45) Date of publication and mention of the grant of the patent: **05.10.2022**
(21) Application number: 16184845.2
(22) Date of filing: 19.08.2016
(51) Int. Cl.: G06F 21/62, H04L 9/40, H04W 4/14, H04W 12/08, G06Q 20/38, G06Q 20/32, G06F 21/42

(54) **SHORT MESSAGE SERVICE READING METHOD AND DEVICE**
KURZNACHRICHTENDIENSTLESEVERFAHREN UND -VORRICHTUNG
PROCÉDÉ ET DISPOSITIF DE LECTURE DE SERVICE DE MESSAGES COURTS

(30) Priority: 18.09.2015 CN 201510600885
(43) Date of publication of application: 22.03.2017
(73) Proprietor: Xiaomi Inc., Beijing 100085 (CN)
(72) Inventor: BAO, Xiehao, Beijing, 100085 (CN); ZHANG, Jianchun, Beijing, 100085 (CN); ZHAO, Jiankai, Beijing, 100085 (CN)
(74) Representative: Hughes, Andrea Michelle

(56) References cited:
- WO-A1-2010/026540
- US-A1- 2009 144 829
- US-B1- 8 543 821
- MULLINER COLLIN ET AL: "SMS-Based One-Time Passwords: Attacks and Defense", 18 July 2013 (2013-07-18), NETWORK AND PARALLEL COMPUTING; [LECTURE NOTES IN COMPUTER SCIENCE; LECT.NOTES COMPUTER], SPRINGER INTERNATIONAL PUBLISHING, CHAM, PAGE(S) 150 - 159, XP047036547, ISSN: 0302-9743 ISBN: 978-3-642-34690-3 * sections 5-7 *

## Description

### TECHNICAL FIELD

The present disclosure relates to the field of information security, particularly to a method and device for reading a Short Message Service (SMS).

### BACKGROUND

At present, a common authentication method is to perform safety verification by using a verification code carried in an SMS.

In an Android operating system, a third party application may be authorized to read an SMS, and when the third party application is a malicious application, the third party application may read a verification code in the SMS so as to acquire an authority to execute a sensitive operation, such as an authority to execute a payment operation, and an authority to execute registration and login and so on.

The embodiments of the present disclosure are presented to solve the problem that a malicious application can read a verification code in an SMS to acquire an authority to execute a sensitive operation due to the reason that a third party application only having an SMS reading authority at the operating system level can read the content of an SMS in an SMS component. WO 2010/026540 discloses message storage and retrieval. US 2009/0144829 discusses a method and apparatus to protect sensitive content for human-only consumption.

### SUMMARY

Accordingly, the present invention provides a Short Message Service (SMS) reading method and device, in accordance with claims which follow.

A method for reading an SMS is provided as defined by claim 1.

In an alternative embodiment, the step that the sensitive information in the SMS is hidden may include that:
the sensitive information in the SMS is at least replaced with a preset symbol;
   or,
the sensitive information in the SMS is at least replaced with preset prompt information;
   or,
the sensitive information in the SMS is at least encrypted.

In an alternative embodiment, the method may further include:
identifying whether the received SMS is an SMS carrying sensitive information; and
when the SMS is an SMS carrying sensitive information, a location of the sensitive information in the SMS is recorded.

In an alternative embodiment, the step that whether the received SMS is an SMS carrying sensitive information is identified may include that:
whether the SMS is an SMS carrying sensitive information is identified according to characteristic information of the SMS, wherein the characteristic information includes at least one of a sender number, an SMS content and an SMS template.

In an alternative embodiment, the step that a location of the sensitive information in the SMS is recorded may include that:
the location of the sensitive information in the SMS is identified through an SMS template; and
the location of the sensitive information in the SMS is recorded.

In an alternative embodiment, the step that a reading request of reading an SMS is received from a third party application may include that:
the reading request of reading the SMS is received from the third party application through an operating system;
whether the third party application has an SMS reading authority is detected through the operating system;
when the third party application has the SMS reading authority, the reading request is forwarded to an SMS component through the operating system; and the reading request forwarded by the operating system is received through the SMS component.

The method further includes that:
a reading request of reading the SMS is received from a default SMS application of the operating system; and
the reading request of the default SMS application is responded to.

A device for reading an SMS is provided as defined by claim 5.

In an alternative embodiment, the information processing module may be configured to at least replace the sensitive information in the SMS with a preset symbol;
or,
the information processing module may be configured to at least replace the sensitive information in the SMS with preset prompt information;
   or,
the information processing module may be configured to at least encrypt the sensitive information in the SMS.

In an alternative embodiment, the device may further include:
an SMS identifying module, configured to identify whether the received SMS is an SMS carrying sensitive information; and
a location recording module configured to record, when the SMS is an SMS carrying sensitive information, a location of the sensitive information in the SMS.

In an alternative embodiment, the SMS identifying module may be configured to identify, according to characteristic information of the SMS, whether the SMS is an SMS carrying sensitive information, wherein the characteristic information includes at least one of a sender number, an SMS content and an SMS template.

In an alternative embodiment, the location recording module may include:
a identifying sub-module, configured to identify the location of the sensitive information in the SMS through an SMS template; and
a recording sub-module, configured to record the location of the sensitive information in the SMS.

In an alternative embodiment, the request receiving module may include:
a reading receiving sub-module, configured to receive from the third party application the reading request of reading the SMS through an operating system;
an authority detecting sub-module, configured to detect, through the operating system, whether the third party application has an SMS reading authority;
a request forwarding sub-module configured to forward, when the third party application has the SMS reading authority, the reading request to an SMS component through the operating system; and
an information receiving sub-module configured to receive, through the SMS component, the reading request forwarded by the operating system.

The device further includes:
a default receiving module, configured to receive, from a default SMS application of an operating system, a reading request of reading the SMS; and
a default responding module, configured to respond to the reading request of the default SMS application.

Consequently, the invention is also directed to a computer program, according to claim 9, for executing the steps of a method for reading an SMS as described above when this program is executed by a computer.

This program can use any programming language and take the form of source code, object code or a code intermediate between source code and object code, such as a partially compiled form, or any other desirable form.

The technical solutions provided by the embodiments of the present disclosure may include the following beneficial effects.

A reading request of reading an SMS is received from a third party application, and when the SMS is an SMS carrying sensitive information, the sensitive information in the SMS is hidden, and the processed SMS is fed back to the third party application, thereby solving the problem that a malicious application can read a verification code in an SMS to acquire an authority to execute a sensitive operation due to the reason that a third party application only having an SMS reading authority at the operating system level can read the content of an SMS in an SMS component, and prohibiting the third party application from reading an SMS carrying sensitive information, thus avoiding leakage of the sensitive information in the SMS while implementing authority control over a single SMS granularity.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic diagram of components of a mobile terminal according to an exemplary embodiment;
Fig. 2 is a flowchart of an SMS reading method according to an exemplary embodiment;
Fig. 3A is a flowchart of an SMS reading method according to another exemplary embodiment;
Fig. 3B is a flowchart of sub-steps of an SMS reading method according to still another exemplary embodiment;
Fig. 4A is a schematic diagram of an interface for hiding sensitive information according to an exemplary embodiment;
Fig. 4B is a schematic diagram of an interface for hiding sensitive information according to another exemplary embodiment;
Fig. 5 is a flowchart of an SMS reading method according to still another exemplary embodiment;
Fig. 6 is a flowchart of an SMS reading method according to still another exemplary embodiment;
Fig. 7A is a schematic diagram of an interface for reading an SMS according to an exemplary embodiment;
Fig. 7B is a schematic diagram of an interface for reading an SMS according to another exemplary embodiment;
Fig. 8 is a block diagram of an SMS reading device according to an exemplary embodiment;
Fig. 9 is a block diagram of an SMS reading device according to another exemplary embodiment;
Fig. 10 is a block diagram of an SMS reading device according to still another exemplary embodiment;
Fig. 11 is a block diagram of an SMS reading device according to still another exemplary embodiment; and
Fig. 12 is a block diagram of an SMS reading device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

Several terms involved in the embodiments of the present disclosure will be introduced briefly first.

Android operating system: a Linux-based operating system of free and open source codes, which is produced by Google and mainly applied to a mobile terminal. The mobile terminal may be a mobile phone, a tablet computer, an electronic book reader, a Moving Picture Experts Group Audio Layer III (MP3) player, a Moving Picture Experts Group Audio Layer IV (MP4) player, a portable laptop computer and so on.

Application: an application generally includes at least one program component in an Android operating system. There are four program components, which are an activity component, a service component, a content provider component and a broadcast receiver component. Activity component: which is a component responsible for interacting with a user in an android application and providing a visible user interface for the Android application. An Android application may include more than one activity component.

Service component: which is a component operating in the background and not providing a user interface in an Android application. An Android application may include more than one service component.

Content provider component: which is a component configured to provide data, such as an SMS, a tone, a piece of wallpaper, contacts and so on, for other applications or for other components in a current application in an Android application. The content provider component can encapsulate data in various formats and provide the data to other applications or components in a standard form, wherein an SMS component in the embodiments of the present disclosure is a content provider component.

Broadcast receiver component: which is configured to receive and respond to a message that is broadcast by an operating system. The broadcast receiver component can receive a message of interest (or a message of a predefined message type) and then process and forward the message to other components in a current application.

Third party application: which is an application rather than preinstalled applications of an operating system in a mobile terminal.

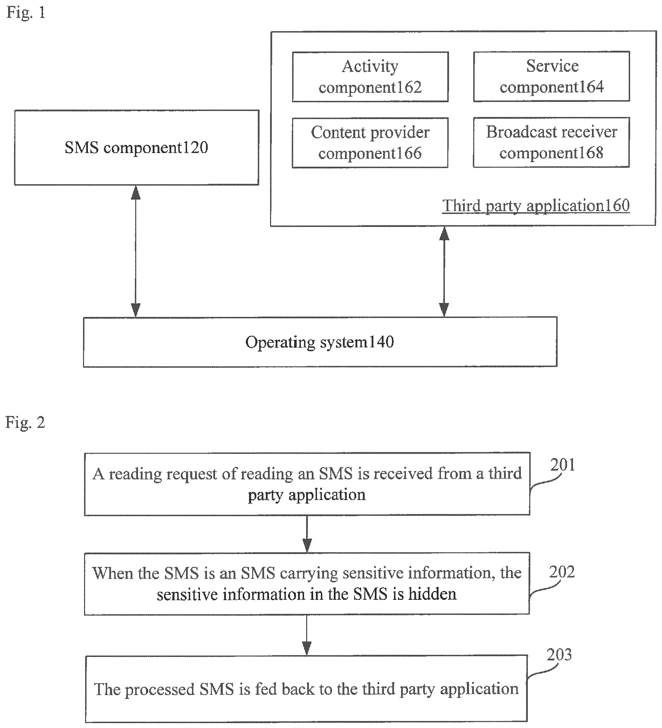

To facilitate understanding, please refer to Fig. 1 first, which shows a schematic diagram of components of a mobile terminal according to an exemplary embodiment. The mobile terminal includes an SMS component 120, an operating system 140 and a third party application 160. The operating system 140 receives a reading request sent by the third party application 160, and forwards the reading request to the SMS component 120.

The mobile terminal may be a mobile phone, a tablet computer, an electronic book reader, an MP3 player, an MP4 player, a portable laptop computer and so on.

The SMS component 120 is a content provider component in an Android application and configured to provide SMS data for other applications or other components in a current application. The SMS component 120 may receive an SMS sent by a source party, and store received SMSs to form an SMS list.

The operating system 140 pre-stores a configuration file, and the configuration file stores an SMS reading authority of the third party application 160 at the operating system level. Alternatively, the operating system 140 stores a general configuration file. The configuration file stores SMS reading authorities of all third party applications 160 at the operating system level.

Alternatively, the operating system 140 stores a plurality of configuration files, and the SMS reading authority of each third party application 160 at the operating system level respectively corresponds to a configuration file.

The third party application 160, when having the SMS reading authority at the operating system level, can read all SMSs in the SMS component 130, and the third party application 160 without the SMS reading authority at the operating system level cannot read any SMS in the SMS component 120.

The third party component 160 may include one or more program components, each of which may be any one of an activity component 162, a service component 164, a content provider component 166 and a broadcast receiver component 168.

When the third party application 160 needs to read an SMS in the short message component 120, the third party application 160 sends a reading request for reading the SMS to the operating system 140 first. After receiving the reading request, the operating system 140 detects whether the third party application 160 is in an SMS reading authority list, and when the third party application 160 is in the SMS reading authority list, the operating system 140 forwards to the SMS component 120 the SMS reading request sent by the third party application 160. After receiving the reading request forwarded by the operating system 140, the SMS component 120 searches, according to the SMS that needs to be read in the reading request, the SMS that needs to be read in the SMS list, and feeds back the found SMS to the third party application 160 through the operating system 140.

Fig. 2 is a flowchart of an SMS reading method according to an exemplary embodiment. The present embodiment illustrates the SMS reading method applied in the mobile terminal as shown in Fig. 1 as an example. The SMS reading method includes several steps as follows. Step 201: A reading request of reading an SMS is received from a third party application. The third party application is an application in a configuration file of the operating system, and the configuration file is a file for performing authority control according to an application granularity.

Step 202: When the SMS is an SMS carrying sensitive information, the sensitive information in the SMS is hidden.

The hiding processing is at least encrypting the sensitive information in the SMS so that the SMS is in an invisible state.

Step 203: The processed SMS is fed back to the third party application.

To sum up, in the SMS reading method provided in the embodiment of the present disclosure, a reading request of reading an SMS is received from a third party application; when the SMS is an SMS carrying sensitive information, the sensitive information in the SMS is hidden; and the processed SMS is fed back to the third party application, thereby solving the problem that a malicious application can read a verification code in an SMS to acquire an authority of executing a sensitive operation due to the reason that a third party application only having an SMS reading authority at the operating system level can read the content of an SMS in an SMS component and prohibiting a third party application from reading an SMS carrying sensitive information, thus avoiding leakage of the sensitive information in the SMS while implementing authority control over a single SMS granularity.

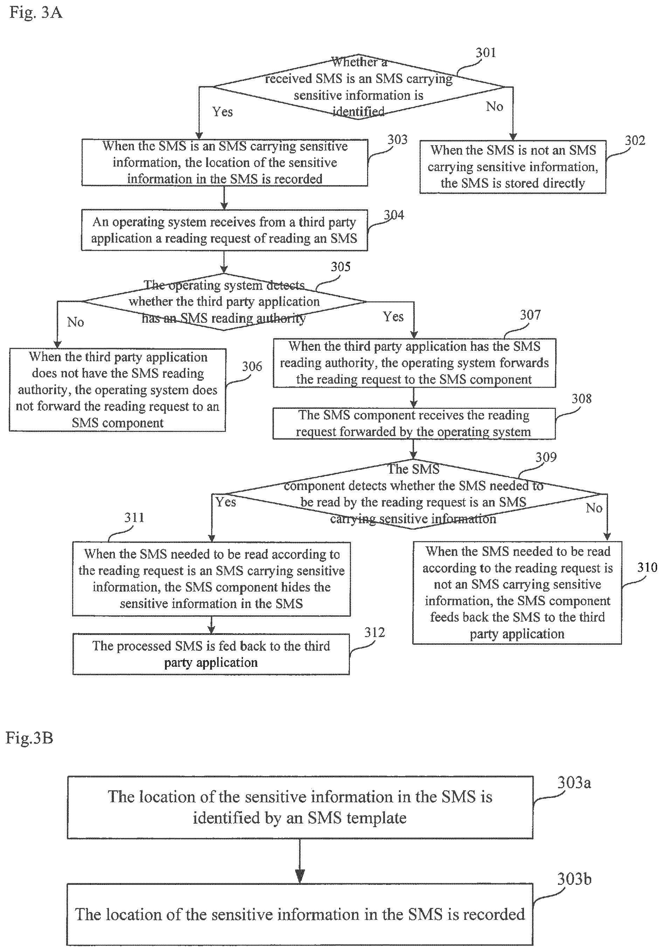

Fig. 3A is a flowchart of an SMS reading method according to another exemplary embodiment. The present embodiment illustrates the SMS reading method applied in the mobile terminal in the implementation environment as shown in Fig. 1 as an example. The SMS reading method includes several steps as follows.

Step 301: Whether a received SMS is an SMS carrying sensitive information is identified. The sensitive information is information related to virtual properties and/or a control authority of a user in a network.

The SMS component receives an SMS sent by an SMS source party and identifies the received SMS so as to identify whether the SMS carries sensitive information.

The step that the SMS component identifies the SMS may include that the SMS component identifies, according to characteristic information of the SMS, whether the SMS is an SMS carrying sensitive information, wherein the characteristic information includes at least one of a sender number, an SMS content and an SMS template.

Step 302: When the SMS is not an SMS carrying sensitive information, the SMS is stored directly.

Step 303: When the SMS is an SMS carrying sensitive information, the location of the sensitive information in the SMS is recorded.

When an identifying result indicates that the SMS is an SMS carrying sensitive information, the SMS component records the location of the sensitive information in the SMS.

The SMS component marks the SMS as an SMS carrying sensitive information.

In the present embodiment, Step 303 may include the following sub-steps, as shown in Fig. 3B.

Step 303a: The location of the sensitive information in the SMS is identified by an SMS template.

The SMS template may identify the location of the sensitive information in the SMS according to an SMS template. The SMS component pre-stores a plurality of SMS templates carrying sensitive information and stores the location of the sensitive information corresponding to the SMS template. For example, an SMS template is "you are paying with Xiaomi Company, and the payment code is xxxxx", then the SMS component stores the SMS template, and information indicating that the location of sensitive information is six numbers after keywords "the payment code is" will be stored in a corresponding location of the SMS template. After identifying the SMS, the SMS component matches the SMS which is identified to carry the sensitive information with a stored SMS template, so as to acquire the location of the sensitive information in the SMS.

Step 303b: The location of the sensitive information in the SMS is recorded.

The SMS component records, in a corresponding location of the SMS, information of the acquired location of the sensitive information in the SMS.

Step 304: The operating system receives from the third party application a reading request of reading an SMS.

When the third party application needs to read an SMS in the SMS component, the third party application sends a reading request of reading the SMS to the operating system first. Accordingly, the operating system receives the reading request of reading the SMS from the third party application.

Here, the third party application may be an SMS-class application, a payment-class application, a registration-class application, and so on, and the type of the third party application is not defined in an embodiment of the present disclosure.

Step 305: The operating system detects whether the third party application has an SMS reading authority.

The operating system pre-stores SMS reading authorities of third party applications, and when receiving from a certain third party application a reading request of reading an SMS, the operating system acquires a pre-stored configuration file first, and detects whether the third party application is in the pre-stored configuration file. When the third party application is in the pre-stored configuration file, the third party application has an SMS reading authority, otherwise, the third party application does not have the SMS reading authority. Step 306: When the third party application does not have the SMS reading authority, the operating system does not forward the reading request to the SMS component.

Step 307: When the third party application has the SMS reading authority, the operating system forwards the reading request to the SMS component.

When it is detected by the operating system that the third party application has the SMS reading authority at the operating system level, the operating system forwards the reading request of the third party application to the SMS component.

Step 308: The SMS component receives the reading request forwarded by the operating system.

The SMS component receives the reading request forwarded by the operating system.

For example, a third party application "Xiaomi Mall" sends to the operating system, a request of reading an SMS containing a payment password of "Xiaomi payment" in the SMS component, then after receiving the reading request, the operating system detects whether "Xiaomi Mall" has an SMS reading authority in the operating system, and when "Xiaomi Mall" has the SMS reading authority, forwards the reading request sent by "Xiaomi Mall" to the SMS component, and the SMS component receives the reading request forwarded by the operating system.

Step 309: The SMS component detects whether the SMS needed to be read by the reading request is an SMS carrying sensitive information.

The SMS component acquires, according to the received reading request, the SMS needed to be read according to the reading request and detects whether the SMS needed to be read according to the reading request carries a marker. When the marker is carried, the SMS is an SMS carrying sensitive information, and otherwise, the SMS is not an SMS carrying sensitive information.

Step 310: When the SMS needed to be read according to the reading request is not an SMS carrying sensitive information, the SMS component feeds back the SMS to the third party application.

Step 311: When the SMS needed to be read according to the reading request is an SMS carrying sensitive information, the SMS component hides the sensitive information in the SMS.

When the SMS needed to be read according to the reading request is an SMS carrying sensitive information, the sensitive information in the SMS is hidden.

Alternatively, the hiding processing is at least replacing the sensitive information in the SMS with a preset symbol.

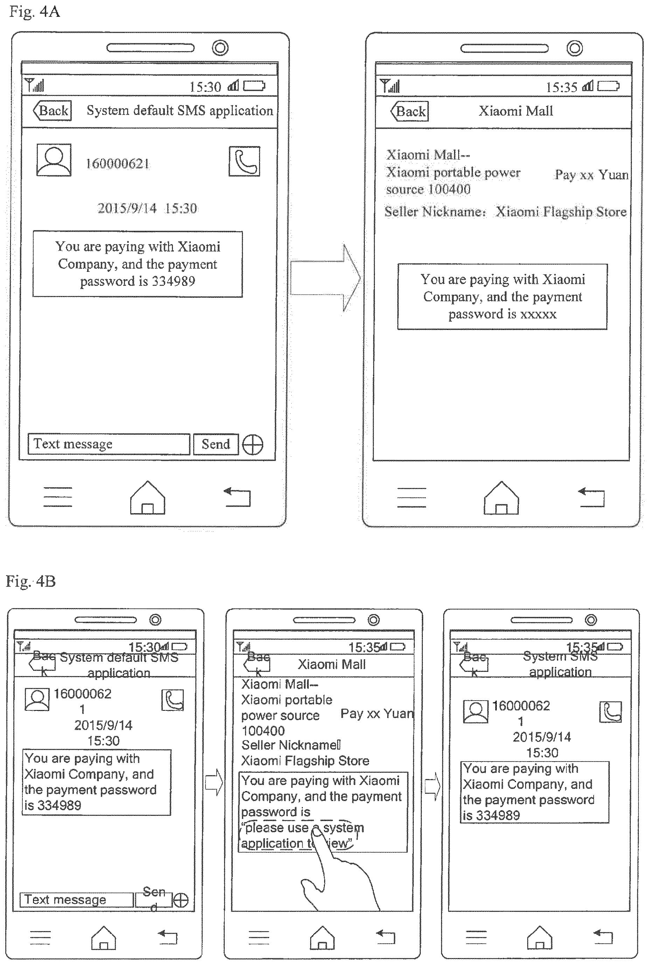

For example, "you are paying with Xiaomi Company, and the payment password is 123456" in an SMS is processed into "you are paying with Xiaomi Company, and the payment password is XXXXXX", as shown in Fig. 4A.

Alternatively, the hiding processing is at least replacing the sensitive information in the SMS with preset prompt information.

The preset prompt information is used for prompting a user to use a designated application to view the sensitive information.

For example, "you are paying with Xiaomi Company, and the payment password is 123456" in an SMS is processed into "you are paying with Xiaomi Company, and please use a system SMS application to view the payment password", as shown in Fig. 4B.

The preset prompt information may be also a hyperlink. When triggered, the hyperlink redirects to a designated application to view the sensitive information.

Alternatively, the hiding processing is at least encrypting the sensitive information in the SMS.

For example, "you are paying with Xiaomi Company, and the payment password is 123456" in an SMS is processed into "you are paying with Xiaomi Company, and the payment password is abcdef".

Step 312: The processed SMS is fed back to the third party application.

The SMS component subjects the SMS carrying the sensitive information to the hiding processing and then feeds back the processed SMS to the third party application.

It needs to be noted that: Step 301 to Step 303 and Step 304 to Step 308 in the present embodiment are not limited to specific sequences in the present embodiment. In other words, the step that the SMS component identifies whether the SMS is an SMS carrying sensitive information may be performed after the step that the reading request forwarded by the operating system is received, and whether the SMS is an SMS carrying sensitive information may be pre-identified before the reading request forwarded by the operating system is received.

To sum up, in the SMS reading method provided in the embodiment of the present disclosure, a reading request of reading an SMS is received from a third party application, and when the SMS is an SMS carrying sensitive information, the sensitive information in the SMS is hidden, and the processed SMS is fed back to the third party application, thereby solving the problem that a malicious application can read a verification code in an SMS to acquire an authority of executing a sensitive operation due to the reason that a third party application only having an SMS reading authority at the operating system level can read the content of an SMS in an SMS component and prohibiting a third party application from reading an SMS carrying sensitive information, thus avoiding leakage of the sensitive information in the SMS while implementing authority control over a single SMS granularity.

The location of the sensitive information is recorded and the content of the sensitive information is hidden, thus avoiding leakage of the sensitive information in the SMS. In the meanwhile, only an SMS carrying sensitive information is hidden, thereby implementing authority control over a single SMS granularity.

Only the processing of sensitive information in an SMS is added in the SMS component, thereby implementing authority control over a single SMS granularity, and achieving the effect of simple and convenient operation and easy implementation.

In the embodiment of Fig. 3A, the SMS component may identify whether the SMS is an SMS carrying sensitive information according to several methods as follows in Step 301.

The SMS component may identify, according to a sender number of the received SMS, whether the SMS carries sensitive information. Generally, a list is stored in an SMS background server. For example, the list stores company A and SMS number 1 and SMS number 2 which are SMS numbers corresponding to company A, company B and SMS number 3 and SMS number 4 which are SMS numbers corresponding to company B, company C and SMS number 5 and SMS number 6 which are SMS numbers corresponding to company C, and so on.

Exemplarily, the list stored in the SMS background server is as shown in the following Table 1.

**Table 1**

| Company name | SMS number |
|---|---|
| Company A | SMS number 1 |
| | SMS number 2 |
| Company B | SMS number 3 |
| | SMS number 4 |
| Company C | SMS number 5 |
| | SMS number 6 |

When the sender number of the SMS received by the SMS component is SMS number 5, it can be learned from the corresponding relations in Table 1 that a source party of the SMS is company C, and the SMS component identifies the SMS as an SMS carrying sensitive information.

Alternatively, the SMS component may identify, according to an SMS content of the received SMS, whether the SMS carries sensitive information. For example, the SMS content is "[Asan Travel • Go] 06-22 07:15 Kunming Changshui Airport--take-off-08:55 to Chongqing Jiangbei Airport 2B landing Lucky Airlines 8L9863, Order XXXXXXXXXXX paying, Zhang Wuji (Ticket number: XXX-XXXXXXXXXX). Clink on http://tb.cn/3eXI06y, and check details of the flight on the client.", then the SMS component identifies, according to keywords [Asan Travel •Go] in the SMS content, that the SMS is an SMS carrying sensitive information.

Alternatively, the SMS component may also identify, according to an SMS template, whether the SMS carries sensitive information. For example, the SMS component pre-stores a plurality of SMS templates carrying sensitive information. When the SMS is received, the SMS component matches the received SMS with a stored SMS template. When the received SMS is matched with a certain SMS template, the SMS is identified as an SMS carrying sensitive information.

For example, SMS 1: sender: 140000621 "[Company A] order number XXXXXXXXXXX paying, the verification number is XXXXXX. Click on http://tb.cn/3eXI06y, and check details on the client."

SMS 2: sender: 140000622 "[Company A] order number XXXXXXXXXXX paying, the verification code is XXXXXX. Click on http://tb.cn/3eXI06y, and check details on the client."

SMS 1 and SMS 2 are SMSs sent by Jingdong Company, a source party identifier of SMS 1 is "140000621", a source party identifier of SMS 2 is "140000622" and the two source parties have the same prefix "1400062". In the meanwhile, the two SMSs contain a keyword "[Company A]".

Exemplarily, two SMS templates constructed by SMS 1 and SMS 2 are as follows.
<payment template 1> □ "[Company A] <Order number> <Verification code>."
<Payment template 2> □ "[Company A] < Order number > < Verification code>."

Exemplarily, corresponding relations between extracted templates and combinations of identification characteristics and keywords of the source parties of the SMSs are as shown in the following Table 2.

**Table 2**

| SMS characteristic | SMS template |
|---|---|
| 14000062X + [Company A] | <payment template 1> |
| 14000062X + [Company A] | <payment template 2> |

When the SMS received by the SMS component carries a characteristic of "14000062X + [Company A]", the SMS will be matched with <payment template 2> in the SMS templates. Therefore, the SMS component identifies the SMS as an SMS carrying sensitive information. For example, after a product is purchased in Xiaomi Mall, an order is submitted by clicking, acquisition of a verification code from a mobile phone is selected during payment, and a mobile phone bound with the website of Xiaomi Mall will receive a verification code-carried SMS sent by Xiaomi Company within 60 seconds. Provided that the received SMS is: Sender: 160000621 "[Xiaomi Company] Order number 1111111 Paying, the verification code is 123456, please input the verification code within 5 minutes."

A third party application "Xiaomi Mall" sends a reading request to the operating system. The operating system forwards, to the SMS component, the reading request sent by the third party application. After acquiring the reading request, the SMS component processes the content in the SMS as "[Xiaomi Company] Order number 1111111 paying, the verification code is XXXXXX, please input the verification code within 5 minutes." and feeds back the SMS to the third party application "Xiaomi Company".

After acquiring the reading request, the SMS component may process the content in the SMS as "[Xiaomi Company] Order number 1111111 paying, the verification code is abcdef, please input the verification code within 5 minutes." and feeds back the SMS to the third party application"Xiaomi Company".

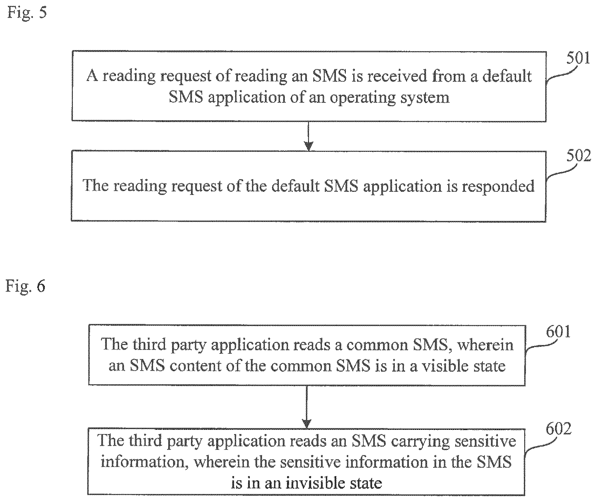

In the embodiment of Fig. 3A, all reading requests forwarded by the operating system to the SMS component are reading requests sent by third party applications while a default SMS application of the operating system may also read the SMS content of the SMS component, please refer to the following steps, as shown in Fig. 5.

Step 501: A reading request of reading the SMS is received from a default SMS application of the operating system.

The SMS component receives a reading request sent by a default SMS application of the operating system, so as to read an SMS in the SMS component.

Step 502: The reading request of the default SMS application is responded to.

After receiving the reading request sent by the default SMS application, the SMS component responds to the reading request directly.

The default SMS application includes a preinstalled SMS application of the mobile terminal, or other trusted SMS applications.

Since SMSs in the SMS component are divided into SMSs carrying sensitive information and common SMSs, there are two situations in which the third party application reads an SMS in the SMSs, please refer to the following steps, as shown in Fig. 6.

Step 601: The third party application reads a common SMS, wherein an SMS content of the common SMS is in a visible state.

The common SMS refers to an SMS not carrying sensitive information, and the SMS content thereof is in a visible state. The third party application only needs to have an SMS reading authority at the operating system level so as to read the common SMS in the SMS component.

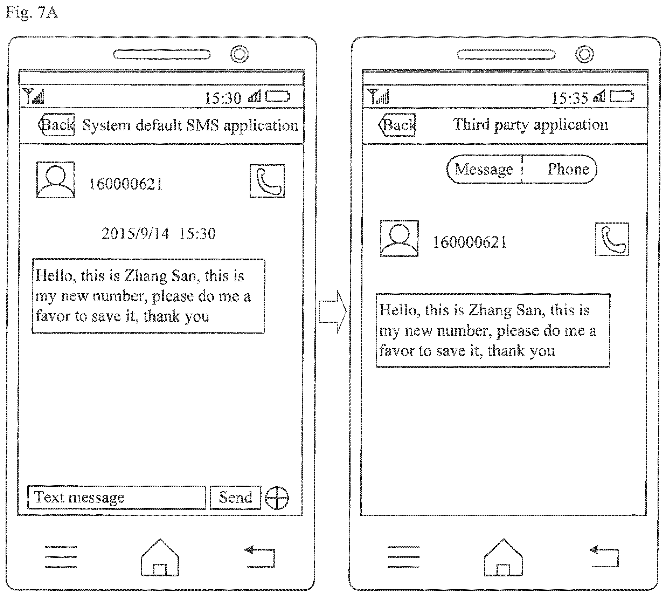

The third party applications sends a reading request of reading the common SMS to the operating system, and when the third party application has the SMS reading authority, the operating system forwards the reading request to the SMS component, and the SMS component feeds back the common SMS to the third party application, as shown in Fig. 7A.

Step 602: The third party application reads an SMS carrying sensitive information, wherein the sensitive information in the SMS is in an invisible state.

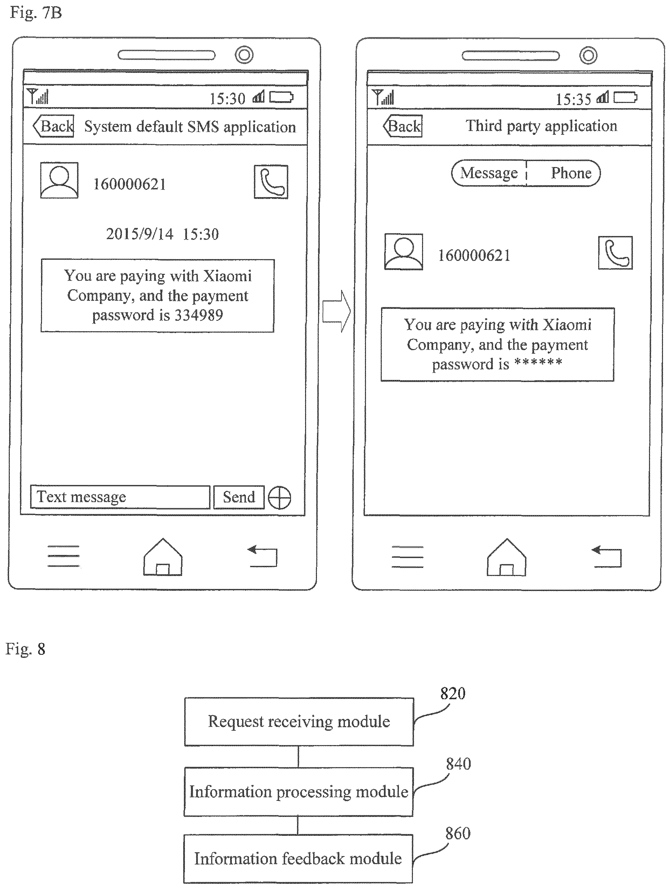

The embodiment of Fig. 3A shows a process in which the third party application reads the SMS carrying the sensitive information. The sensitive information in the SMS is in an invisible state, and the sensitive information in the sensitive information-carrying SMS read by the third party application is in an invisible state, as shown in Fig. 7B.

In the embodiment of Fig. 6, the third party application reads an SMS in the SMS component in two situations while the default SMS application of the operating system reads an SMS in the SMS component in only one situation, please refer to the following step.

Step 603: The default SMS application of the operating system reads an SMS, and sensitive information in the SMS is in a visible state.

The default SMS application of the operating system may read an SMS in the SMS component directly, and sensitive information in the SMS is in a visible state.

The following description refers to device embodiments of the present disclosure, which may be used for executing the method embodiments of the present disclosure. Please refer to the method embodiments of the present disclosure for details not disclosed in the device embodiments of the present disclosure.

Fig. 8 is a block diagram of an SMS reading device according to an exemplary embodiment. The SMS reading device may be implemented as a mobile terminal or a part of the mobile terminal by a combination of software and hardware. The SMS reading device includes, but is not limited to:
a request receiving module 820, configured to receive from a third party application a reading request of reading an SMS;
an information processing module 840 configured to hide, when the SMS is an SMS carrying sensitive information, the sensitive information in the SMS; and
an information feedback module 860, configured to feed back the processed SMS to the third party application.

To sum up, in the SMS reading device provided in the embodiment of the present disclosure, a reading request of reading an SMS is received from a third party application, and when the SMS is an SMS carrying sensitive information, the sensitive information in the SMS is hidden, and the processed SMS is fed back to the third party application, thereby solving the problem that a malicious application can read a verification code in an SMS to acquire an authority of executing a sensitive operation due to the reason that a third party application only having an SMS reading authority at the operating system level can read all SMSs in an SMS component and prohibiting a third party application from reading an SMS carrying sensitive information, thus avoiding leakage of the sensitive information in the SMS while implementing authority control over a single SMS granularity.

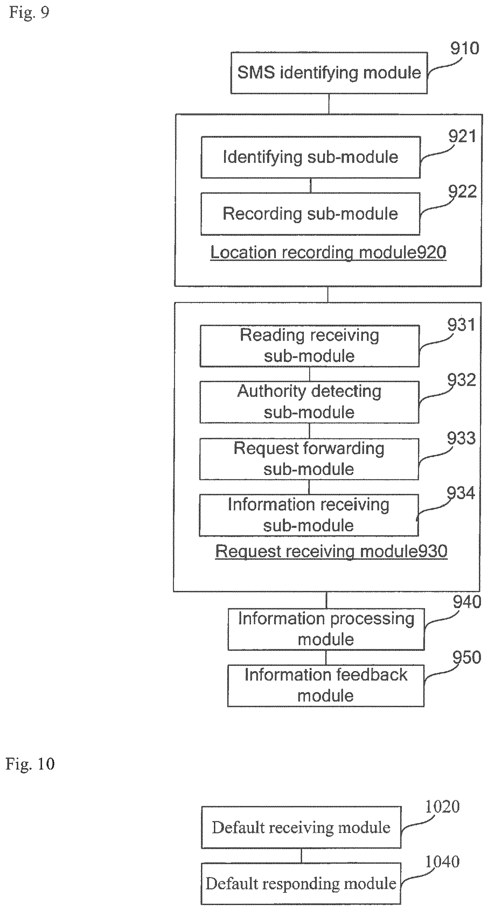

Fig. 9 is a block diagram of an SMS reading device according to another exemplary embodiment. The SMS reading device may be implemented as a mobile terminal or a part of the mobile terminal by a combination of software or hardware. The SMS reading device includes, but is not limited to:
an SMS identifying module 910, configured to identify whether a received SMS is an SMS carrying sensitive information.

The SMS identifying module 910 may be further configured to identify, according to characteristic information of the SMS, whether the SMS is an SMS carrying sensitive information, wherein the characteristic information includes at least one of a sender number, an SMS content and an SMS template.

A location recording module 920 configured to record, when the SMS is an SMS carrying sensitive information, the location of the sensitive information in the SMS.

The location recording module 920 may include:
a identifying sub-module 921, configured to identify the location of the sensitive information in the SMS through an SMS template;
a recording sub-module 922, configured to record the location of the sensitive information in the SMS; and
a request receiving module 930, configured to receive from a third party application a reading request of reading an SMS.

The request receiving module 930 may include:
a reading receiving sub-module 931, configured to receive from the third party application the reading request of reading the SMS through an operating system;
an authority detecting sub-module 932, configured to detect, through the operating system, whether the third party application has an SMS reading authority;
a request forwarding sub-module 933 configured to forward, when the third party application has the SMS reading authority, the reading request to an SMS component through the operating system;
an information receiving sub-module 934, configured to receive, through the SMS component, the reading request forwarded by the operating system; and an information processing module 940 configured to hide, when the SMS is an SMS carrying sensitive information, the sensitive information in the SMS.

The information processing module 940 may be configured to at least replace the sensitive information in the SMS with a preset symbol.

Alternatively, the information processing module 940 may be configured to at least replace the sensitive information in the SMS with preset prompt information.

Alternatively, the information processing module 940 may be configured to at least encrypt the sensitive information in the SMS.

An information feedback module 950 is configured to feed back the processed SMS to the third party application.

To sum up, in the SMS reading device provided in the embodiment of the present disclosure, a reading request of reading an SMS is received from a third party application, and when the SMS is an SMS carrying sensitive information, the sensitive information in the SMS is hidden, and the processed SMS is fed back to the third party application, thereby solving the problem that a malicious application reads a verification code in an SMS to acquire an authority to execute a sensitive operation due to the reason that a third party application only having an SMS reading authority at the operating system level can read all SMSs in an SMS component and prohibiting a third party application from reading an SMS carrying sensitive information, thus avoiding leakage of the sensitive information in the SMS while implementing authority control over a single SMS granularity.

The location of the sensitive information is recorded and the content of the sensitive information is hidden, thus avoiding leakage of the sensitive information in the SMS. In the meanwhile, only an SMS carrying sensitive information is hidden, thereby implementing authority control over a single SMS granularity.

Only the processing of sensitive information in an SMS is added in the SMS component, thereby implementing authority control over a single SMS granularity, and achieving the effect of simple and convenient operation and easy implementation.

In the embodiment of Fig. 9, all reading requests forwarded by the operating system to the SMS component are reading requests sent by third party applications while a default SMS application of the operating system may also read an SMS content of the SMS component, please refer to the following modules, as shown in Fig. 10:
a default receiving module 1020, configured to receive, from a default SMS application of an operating system, a reading request of reading the SMS; and
a default responding module 1040, configured to respond to the reading request of the default SMS application.

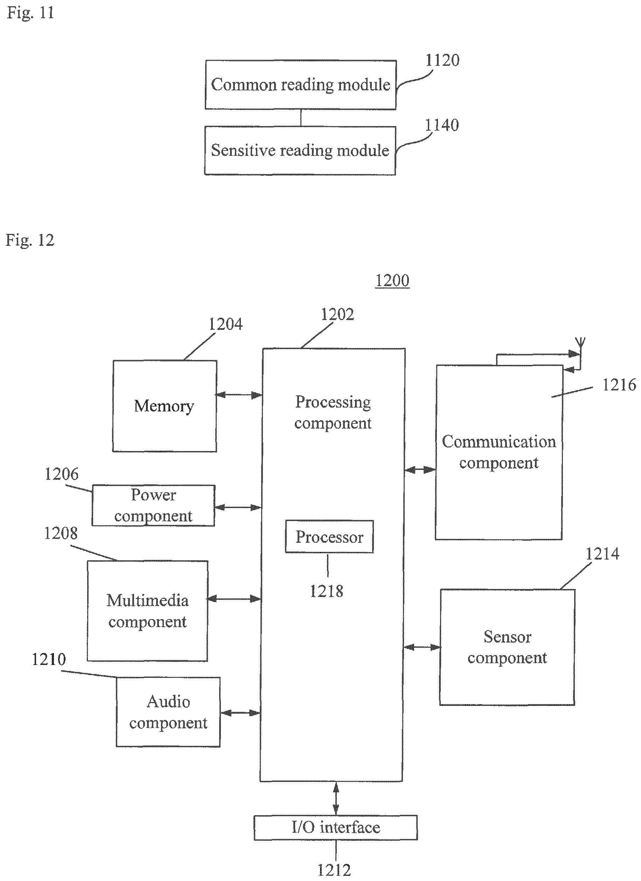

Since SMSs in the SMS component are divided into SMSs carrying sensitive information and common SMSs, there are two situations in which the third party application also reads an SMS in the SMSs, please refer to the following modules, as shown in Fig. 11:
a common reading module 1120, configured to read a common SMS for a third party application, wherein an SMS content of the common SMS is in a visible state; and
a sensitive reading module 1140, configured to read an SMS carrying sensitive information for the third party application, wherein the sensitive information in the SMS is in an invisible state.

The default SMS application of the operating system reads a common SMS and an SMS carrying sensitive information in only one situation, please refer to the following module:
a default reading module, configured to read an SMS for the default SMS application of the operating system, wherein the sensitive information in the SMS is in a visible state (not shown in the figure).

Specific methods for modules in the devices in the embodiments above to execute operations have been expounded in the embodiments related to the method, and will not be elaborated and described in details herein.

An embodiment of the present disclosure further provides an SMS reading device. The device may be configured to implement an SMS reading method provided by an embodiment of the present disclosure. The device includes: a processor; and a memory configured to store an instruction executable by the processor,
wherein the processor is configured to:
receive from a third party application a reading request of reading an SMS;
when the SMS is an SMS carrying sensitive information, hide the sensitive information in the SMS; and
feed back the processed SMS to the third party application.

An embodiment of the present disclosure further provides an SMS reading device. The device may be configured to implement an SMS reading method provided by an embodiment of the present disclosure. The device includes: a processor; and a memory configured to store an instruction executable by the processor,
wherein the processor is configured to:
read a common SMS for a third party application, wherein an SMS content of the common SMS is in a visible state; and
read an SMS carrying sensitive information for the third party application, wherein the sensitive information in the SMS is in an invisible state.

Fig. 12 is a block diagram of an SMS reading device according to an exemplary embodiment. For example, the device 1200 may be a mobile phone, a computer, a digital broadcasting terminal, a message transceiver, a game console, a tablet device, a medical device, a fitness device, a personal digital assistant and so on.

Referring to Fig. 12, the device 1200 may include one or more of the following components: a processing component 1202, a memory 1204, a power component 1206, a multimedia component 1208, an audio component 1210, an Input/Output (I/O) interface 1212, a sensor component 1214 and a communication component 1216.

Generally, the processing component 1202 controls overall operations of the device 1200, such as operations associated with display, a telephone call, data communication, a camera operation and a recording operation. The processing component 1202 may include one or more processors 1218 to execute instructions so as to perform e all or part of the steps of the method. Besides, the processing component 1202 may include one or more modules, so as to process interaction between the processing component 1202 and other components. For example, the processing component 1202 may include a multimedia module so as to facilitate interaction between the multimedia component 1208 and the processing component 1202. The memory 1204 is configured to store various types of data so as to support operations in the device 1200. Examples of such data include instructions of any applications or methods operated on the device 1200, contact data, phonebook data, messages, pictures, video and so on. The memory 1204 may be implemented using any type of volatile or non-volatile storage devices, or a combination thereof, such as a Static Random-Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a magnetic disk or an optical disk.

The power component 1206 provides power for various components of the device 1200. The power component 1206 may include a power source management system, one or more power sources, and other components associated with power generation, management and distribution of the device 1200.

The multimedia component 1208 includes a screen providing an output interface between the device 1200 and a user. In some embodiments, the screen may include a Liquid Crystal Display (LCD) and a Touch Panel (TP). When the screen includes a TP, the screen may be implemented as a touch screen to receive an input signal from the user. The TP includes one or more touch sensors so as to sense a touch, a slide, and a gesture on the TP. The touch sensor may not only sense a touch or a boundary of a slide, but also detect a duration and a pressure related to the touch or the slide. In some embodiments, the multimedia component 1208 includes a front camera and/or a rear camera. When the device 1200 is in an operation mode, such as a camera mode or a video mode, the front camera and/or the rear camera may receive external multimedia data. Each front camera and each rear camera may be a fixed optical lens system or may be provided with a focal distance or an optical zooming capability. The audio component 1210 is configured to output and/or input an audio signal. For example, the audio component 1210 includes a Microphone (MIC). When the device 1200 is in an operation mode, such as a calling mode, a recording mode and a voice recognition mode, the MIC is configured to receive an external audio signal. The received audio signal may be further stored in the memory 1204 or sent by the communication component 1216. In some embodiments, the audio component 1210 further includes a loudspeaker, configured to output the audio signal.

The I/O interface 1212 provides an interface between the processing component 1202 and a peripheral interface module. The peripheral interface module may be a keyboard, a click wheel, a button and so on. These buttons may include, but are not limited to a homepage button, a volume button, a start button and a lock button.

The sensor component 1214 includes one or more sensors configured to provide status assessments of various aspects of the device 1200. For example, the sensor component 1214 may detect an open/closed state of the device 1200, and the relative locations of the components. For example, the components are the display and the keypad of the device 1200. The sensor component 1214 may further detect a change in position of the device 1200 or a component of the device 1200, the presence of contact between the user and the device 1200, an orientation or an acceleration/deceleration of the device 1200 and a change in the temperature of the device 1200. The sensor component 1214 may include a proximity sensor, configured to detect the presence of a nearby object without any physical contact. The sensor component 1214 may further include an optical sensor, such as a Complementary Metal Oxide Semiconductor (CMOS) or a Charge Coupled Device (CCD) image sensor, configured to be used in an imaging application. In some embodiments, the sensor component 1214 may further include an acceleration sensor, a gyro sensor, a magnetic sensor, a pressure sensor or a temperature sensor.

The communication component 1216 is configured to facilitate wired or wireless communication between the device 1200 and other devices. The device 1200 may be accessed into a wireless network based on a communication standard, such as Wireless Fidelity (WiFi), the second Generation (2G) or the third Generation (3G), or a combination thereof. In an exemplary embodiment, the communication component 1216 receives a broadcast signal from an external broadcast management system or broadcast related information through a broadcast channel. In an exemplary embodiment, the communication component 1216 further includes a Near Field Communication (NFC) module so as to promote short distance communication. For example, the NFC module may be implemented based on a Radio-frequency Identification (RFID) technology, an Infrared Data Association (IrDA) technology, an Ultra Wide Band (UWB) technology, a Bluetooth (BT) technology and other technologies.

In an exemplary embodiment, the device 1200 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, microcontrollers, microprocessors, or other electronic components, and configured to execute the SMS reading method above.

In exemplary embodiments, there is also provided a non-transitory computer-readable storage medium including instructions, such as included in the memory 1204, executable by the by the processor 1218 of the device 1200, for performing the SMS reading method above. For example, the non-temporary computer readable storage medium may be a ROM, a Random-Access Memory (RAM), a Compact Disc-ROM (CD-ROM), a magnetic tape, a floppy disk, an optical data memory and so on.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

### INDUSTRY APPLICABILITY

A reading request of reading an SMS is received from a third party application, and if the SMS is an SMS carrying sensitive information, the sensitive information in the SMS is hidden, and the processed SMS is fed back to the third party application, thereby solving the problem that a malicious application can read a verification code in an SMS to acquire an authority of executing a sensitive operation due to the reason that a third party application only having an SMS reading authority at the operating system level can read the content of an SMS in an SMS component, and prohibiting the third party application from reading an SMS carrying sensitive information, thus avoiding leakage of the sensitive information in the SMS while implementing authority control over a single SMS granularity.

## Claims

1. A method for reading on a mobile terminal a Short Message Service, SMS, the method comprising:
receiving, on the mobile terminal, from a third party application of the mobile terminal a reading request of reading an SMS(201) and, in response to receipt of the reading request:
identifying, according to a keyword in an SMS content or an SMS template, whether the SMS is an SMS carrying sensitive information;
when the SMS is the SMS carrying sensitive information, hiding, on the mobile terminal, the sensitive information in the SMS (202) and feeding back, on the mobile terminal, the SMS in which the sensitive information is hidden to the third party application (203), so that the third party application having an SMS reading authority at an operating system level cannot read the sensitive information in the SMS in an SMS component; and
wherein the step of receiving from a third party application of the mobile terminal a reading request of reading an SMS comprises:
receiving, from the third party application, the reading request of reading the SMS through an operating system;
detecting, through the operating system, whether the third party application has the SMS reading authority;
when the third party application has the SMS reading authority, forwarding the reading request to the SMS component through the operating system; and
receiving, through the SMS component, the reading request forwarded by the operating system;
wherein the method further comprises:
receiving, from a default SMS application of the operating system, a reading request of reading the SMS; and
responding to the reading request of the default SMS application directly.

2. The SMS reading method according to claim 1, wherein the step of hiding the sensitive information in the SMS comprises:
at least replacing the sensitive information in the SMS with a preset symbol;
or,
at least replacing the sensitive information in the SMS with preset prompt information;
or,
at least encrypting the sensitive information in the SMS.

3. The method according to claim 1 or 2, further comprising:
when the SMS is an SMS carrying sensitive information, recording a location of the sensitive information in the SMS.

4. The method according to claim 3, wherein the step of recording a location of the sensitive information in the SMS comprises:
identifying the location of the sensitive information in the SMS through an SMS template; and
recording the location of the sensitive information in the SMS.

5. A device for reading a Short Message Service, SMS, located in a mobile terminal, the device comprising:
a request receiving module (820), configured to receive from a third party application of the mobile terminal a reading request of reading an SMS;
a SMS identifying module (910), configured to in response to receipt of the reading request identify, according to a keyword in an SMS content or an SMS template, whether the SMS is an SMS carrying sensitive information;
an information processing module (840) configured to, in response to the reading request, and when the SMS is the SMS carrying sensitive information, to hide the sensitive information in the SMS, so that the third party application having an SMS reading authority at an operating system level cannot read the sensitive information in the SMS in an SMS component, and
an information feedback module (860), configured to feed back the SMS in which the sensitive information is hidden when the SMS is an SMS carrying sensitive information, to the third party application;
wherein the request receiving module comprises:
a reading receiving sub-module (931), configured to receive from the third party application the reading request of reading the SMS through an operating system;
an authority detecting sub-module (932), configured to detect, through the operating system, whether the third party application has an SMS reading authority;
a request forwarding sub-module (933)configured to forward, when the third party application has the SMS reading authority, the reading request to an SMS component through the operating system; and
an information receiving sub-module (934) configured to receive, through the SMS component, the reading request forwarded by the operating system;
wherein the device further comprises:
a default receiving module, configured to receive, from a default SMS application of the operating system, a reading request of reading the SMS; and
a default responding module, configured to respond to the reading request of the default SMS application directly.

6. The device according to claim 5, wherein
the information processing module is configured to at least replace the sensitive information in the SMS with a preset symbol;
or,
the information processing module is configured to at least replace the sensitive information in the SMS with preset prompt information;
or,
the information processing module is configured to at least encrypt the sensitive information in the SMS.

7. The device according to claim 5 or 6, further comprising:
a location recording module (920) configured to record, when the SMS is an SMS carrying sensitive information, a location of the sensitive information in the SMS.

8. The device according to claim 7, wherein the location recording module comprises:
an identifying sub-module (921), configured to identify the location of the sensitive information in the SMS through an SMS template; and
a recording sub-module (922), configured to record the location of the sensitive information in the SMS.

9. A computer program including instructions which, when the program is executed by a computer, cause the computer to carry out the steps of a method for reading a Short Message Service, SMS, according to any one of claims 1 to 4.

## Patentansprüche

1. Verfahren zum Lesen eines Kurznachrichtendienstes, einer SMS, auf einem mobilen Endgerät, wobei das Verfahren umfasst:
Empfangen einer Leseanforderung zum Lesen einer SMS (201) auf dem mobilen Endgerät von einer Drittanbieteranwendung des mobilen Endgeräts und, als Reaktion auf das Empfangen der Leseanforderung:
Identifizieren anhand eines Schlüsselworts in einem SMS-Inhalt oder einer SMS-Vorlage, ob die SMS eine SMS ist, die sensible Information trägt;
wenn die SMS die SMS ist, die sensible Information trägt, Verbergen der sensiblen Information in der SMS (202) auf dem mobilen Endgerät und Rückkoppeln der SMS, in der die sensible Information verborgen ist, an die Drittanbieteranwendung (203) auf dem mobilen Endgerät, sodass die Drittanbieteranwendung, die eine SMS-Leseberechtigung auf einer Betriebssystemebene hat, die sensible Information in der SMS nicht in einer SMS-Komponente lesen kann; und
wobei der Schritt des Empfangens einer Leseanforderung zum Lesen einer SMS von einer Drittanbieteranwendung des mobilen Endgeräts umfasst:
Empfangen der Leseanforderung zum Lesen der SMS von der Drittanbieteranwendung über ein Betriebssystem;
Erkennen über das Betriebssystem, ob die Drittanbieteranwendung die SMS-Leseberechtigung hat;
wenn die Drittanbieteranwendung die SMS-Leseberechtigung hat, Weiterleiten der Leseanforderung an die SMS-Komponente über das Betriebssystem; und
Empfangen der vom Betriebssystem weitergeleiteten Leseanforderung über die SMS-Komponente;
wobei das Verfahren weiter umfasst:
Empfangen einer Leseanforderung zum Lesen der SMS von einer Standard-SMS-Anwendung des Betriebssystems; und
direkt Antworten auf die Leseanforderung der Standard-SMS-Anwendung.

2. Verfahren zum Lesen von SMS nach Anspruch 1, wobei der Schritt des Verbergens der sensiblen Information in der SMS umfasst:
zumindest das Ersetzen der sensiblen Information in der SMS durch ein voreingestelltes Symbol;
oder
zumindest das Ersetzen der sensiblen Information in der SMS durch voreingestellte Aufforderungsinformation;
oder
zumindest das Verschlüsseln der sensiblen Information in der SMS.

3. Verfahren nach Anspruch 1 oder 2, weiter umfassend:
wenn die SMS eine SMS ist, die sensible Information trägt, Aufzeichnen eines Ortes der sensiblen Information in der SMS.

4. Verfahren nach Anspruch 3, wobei der Schritt des Aufzeichnens eines Ortes der sensiblen Information in der SMS umfasst:
Identifizieren des Ortes der sensiblen Information in der SMS über eine SMS-Vorlage; und
Aufzeichnen des Ortes der sensiblen Information in der SMS.

5. Vorrichtung zum Lesen eines Kurznachrichtendienstes, einer SMS, die sich in einem mobilen Endgerät befindet, wobei die Vorrichtung umfasst:
ein Anforderungsempfangsmodul (820), das konfiguriert ist, um von einer Drittanbieteranwendung des mobilen Endgeräts eine Leseanforderung zum Lesen einer SMS zu empfangen;
ein SMS-Identifizierungsmodul (910), das konfiguriert ist, um als Reaktion auf das Empfangen der Leseanforderung gemäß einem Schlüsselwort in einem SMS-Inhalt oder einer SMS-Vorlage zu identifizieren, ob die SMS eine SMS ist, die sensible Information trägt;
ein Informationsverarbeitungsmodul (840), das konfiguriert ist, um als Reaktion auf die Leseanforderung und wenn die SMS die SMS ist, die sensible Information trägt, die sensible Information in der SMS zu verbergen, sodass die Drittanbieteranwendung, die eine SMS-Leseberechtigung auf einer Betriebssystemebene hat, die sensible Information in der SMS nicht in einer SMS-Komponente lesen kann, und
ein Informationsrückkopplungsmodul (860), das konfiguriert ist, um die SMS, in der die sensible Information verborgen ist, an die Drittanbieteranwendung rückzukoppeln, wenn die SMS eine SMS ist, die sensible Information trägt;
wobei das Anforderungsempfangsmodul umfasst:
ein Leseempfangsuntermodul (931), das konfiguriert ist, um von der Drittanbieteranwendung die Leseanforderung zum Lesen der SMS über ein Betriebssystem zu empfangen;
ein Berechtigungserkennungsuntermodul (932), das konfiguriert ist, um über das Betriebssystem zu erkennen, ob die Drittanbieteranwendung eine SMS-Leseberechtigung hat;
ein Anforderungsweiterleitungsuntermodul (933), das konfiguriert ist, um die Leseanforderung über das Betriebssystem an eine SMS-Komponente weiterzuleiten, wenn die Drittanbieteranwendung die SMS-Leseberechtigung hat; und
ein Informationsempfangsuntermodul (934), das konfiguriert ist, um über die SMS-Komponente die vom Betriebssystem weitergeleitete Leseanforderung zu empfangen;
wobei die Vorrichtung weiter umfasst:
ein Standardempfangsmodul, das konfiguriert ist, um von einer Standard-SMS-Anwendung des Betriebssystems eine Leseanforderung zum Lesen der SMS zu empfangen; und
ein Standardantwortmodul, das konfiguriert ist, um auf die Leseanforderung der Standard-SMS-Anwendung direkt zu antworten.

6. Vorrichtung nach Anspruch 5, wobei
das Informationsverarbeitungsmodul konfiguriert ist, um die sensible Information in der SMS durch ein voreingestelltes Symbol zumindest zu ersetzen;
oder
das Informationsverarbeitungsmodul konfiguriert ist, um die sensible Information in der SMS durch eine voreingestellte Aufforderungsinformation zumindest zu ersetzen;
oder
das Informationsverarbeitungsmodul konfiguriert ist, um die sensible Information in der SMS zumindest zu verschlüsseln.

7. Vorrichtung nach Anspruch 5 oder 6, weiter umfassend:
ein Ortsaufzeichnungsmodul (920), das konfiguriert ist, um, wenn die SMS eine SMS ist, die sensible Information trägt, einen Ort der sensiblen Information in der SMS aufzuzeichnen.

8. Vorrichtung nach Anspruch 7, wobei das Ortsaufzeichnungsmodul umfasst:
ein Identifizierungsuntermodul (921), das konfiguriert ist, um den Ort der sensiblen Information in der SMS über eine SMS-Vorlage zu identifizieren; und
ein Aufzeichnungsuntermodul (922), das konfiguriert ist, um den Ort der sensiblen Information in der SMS aufzuzeichnen.

9. Computerprogramm, das Anweisungen einschließt, die, wenn das Programm von einem Computer ausgeführt wird, den Computer veranlassen, die Schritte eines Verfahrens zum Lesen eines Kurznachrichtendienstes, einer SMS, nach einem der Ansprüche 1 bis 4 auszuführen.

## Revendications

1. Procédé de lecture, sur un terminal mobile, d'un service de messages courts, SMS, le procédé comprenant :
la réception, sur le terminal mobile à partir d'une application tierce du terminal mobile, d'une demande de lecture pour lire un SMS (201) et, en réponse à la réception de la demande de lecture :
l'identification, en fonction d'un mot-clé dans un contenu de SMS ou un modèle de SMS, si le SMS est un SMS portant des informations sensibles ;
quand le SMS est le SMS portant des informations sensibles, la dissimulation, sur le terminal mobile, des informations sensibles dans le SMS (202) et le renvoi, sur le terminal mobile, du SMS dans lequel les informations sensibles sont dissimulées à l'application tierce (203), de manière que l'application tierce possédant une autorité de lecture de SMS à un niveau de système d'exploitation ne puisse pas lire les informations sensibles dans le SMS dans un composant SMS ; et
dans lequel l'étape de réception, à partir d'une application tierce du terminal mobile, d'une demande de lecture pour lire un SMS comprend :
la réception, à partir de l'application tierce, de la demande de lecture pour lire le SMS par l'intermédiaire d'un système d'exploitation ;
la détection, par l'intermédiaire du système d'exploitation, si l'application tierce possède l'autorité de lecture de SMS ;
quand l'application tierce possède l'autorité de lecture de SMS, le transfert de la demande de lecture au composant SMS par l'intermédiaire du système d'exploitation ; et
la réception, par l'intermédiaire du composant SMS, de la demande de lecture transférée par le système d'exploitation ;
dans lequel le procédé comprend en outre :
la réception, à partir d'une application SMS par défaut du système d'exploitation, d'une demande de lecture pour la lecture du SMS ; et
la réponse directement à la demande de lecture de l'application SMS par défaut.

2. Procédé de lecture de SMS selon la revendication 1, dans lequel l'étape de la dissimulation des informations sensibles dans le SMS comprend :
au moins le remplacement des informations sensibles dans le SMS par un symbole prédéfini ;
ou
au moins le remplacement des informations sensibles dans le SMS par des informations rapides prédéfinies ;
ou
au moins le cryptage des informations sensibles dans le SMS.

3. Procédé selon la revendication 1 ou 2, comprenant en outre :
quand le SMS est un SMS portant des informations sensibles, l'enregistrement d'un emplacement des informations sensibles dans le SMS.

4. Procédé selon la revendication 3, dans lequel l'étape d'enregistrement d'un emplacement des informations sensibles dans le SMS comprend :
l'identification de l'emplacement des informations sensibles dans le SMS par l'intermédiaire d'un modèle de SMS ; et
l'enregistrement de l'emplacement des informations sensibles dans le SMS.

5. Dispositif pour la lecture d'un service de messages courts, SMS, situé dans un terminal mobile, le dispositif comprenant :
un module de réception de demande (820) configuré pour recevoir, à partir d'une application tierce du terminal mobile, d'une demande de lecture pour lire un SMS ;
un module d'identification de SMS (910) configuré pour, en réponse à la réception de la demande de lecture, identifier, en fonction d'un mot-clé dans un contenu de SMS ou un modèle de SMS, si le SMS est un SMS portant des informations sensibles ;
un module de traitement d'informations (840) configuré pour, en réponse à la demande de lecture et quand le SMS est le SMS portant des informations sensibles, dissimuler les informations sensibles dans le SMS, de manière que l'application tierce possédant une autorité de lecture de SMS à un niveau de système d'exploitation ne puisse pas lire les informations sensibles dans le SMS dans un composant SMS ; et
un module de renvoi d'informations (860) configuré pour renvoyer le SMS dans lequel les informations sensibles sont dissimulées, quand le SMS est un SMS portant des informations sensibles, à l'application tierce ;
dans lequel le module de réception de demande comprend :
un sous-module de réception de demande (931) configuré pour recevoir, à partir d'une application tierce, la demande de lecture pour lire le SMS par l'intermédiaire d'un système d'exploitation ;
un sous-module de détection d'autorité (932) configuré pour détecter, par l'intermédiaire du système d'exploitation, si l'application tierce possède une autorité de lecture de SMS ;
un sous-module de transfert de demande (933) configuré pour transférer, quand l'application tierce possède l'autorité de lecture de SMS, la demande de lecture à un composant SMS par l'intermédiaire du système d'exploitation ; et
un sous-module de réception d'informations (934) configuré pour recevoir, par l'intermédiaire du composant SMS, la demande de lecture transférée par le système d'exploitation ;
dans lequel le dispositif comprend en outre :
un module de réception par défaut configuré pour recevoir, à partir d'une application SMS par défaut du système d'exploitation, une demande de lecture pour la lecture du SMS ; et
un module de réponse par défaut configuré pour répondre directement à la demande de lecture de l'application SMS par défaut.

6. Dispositif selon la revendication 5, dans lequel
le module de traitement d'informations est configuré pour au moins remplacer les informations sensibles dans le SMS par un symbole prédéfini ;
ou
le module de traitement d'informations est configuré pour au moins remplacer les informations sensibles dans le SMS par des informations rapides prédéfinies ;
ou
le module de traitement d'informations est configuré pour au moins crypter les informations sensibles dans le SMS.

7. Dispositif selon la revendication 5 ou 6, comprenant en outre :
un module d'enregistrement d'emplacement (920) configuré pour enregistrer, quand le SMS est un SMS portant des informations sensibles, un emplacement des informations sensibles dans le SMS.

8. Dispositif selon la revendication 7, dans lequel le module d'enregistrement d'emplacement comprend :
un sous-module d'identification (921) configuré pour identifier l'emplacement des informations sensibles dans le SMS par l'intermédiaire d'un modèle de SMS ; et
un sous-module d'enregistrement (922) configuré pour enregistrer l'emplacement des informations sensibles dans le SMS.

9. Programme informatique comprenant des instructions qui, quand le programme est exécuté par un ordinateur, amènent l'ordinateur à réaliser les étapes d'un procédé de lecture d'un service de messages courts, SMS, selon l'une quelconque des revendications 1 à 4.
